# EUROPEAN PATENT APPLICATION

(11) **EP 4 400 612 A1**
(43) Date of publication of application: **17.07.2024**
(21) Application number: 22878388.2
(22) Date of filing: 28.09.2022
(51) Int. Cl.: C21D 9/40, F16C 19/06, F16C 33/32, F16C 33/62, C22C 38/00, C22C 38/24, C21D 1/06

(54) **ROLLING COMPONENT AND ROLLING BEARING**

(30) Priority: 08.10.2021 JP 2021166215
(71) Applicant: NTN Corporation, Osaka-shi, Osaka 530-0005 (JP)
(72) Inventor: YAMADA, Masahiro, Kuwana-shi, Mie 511-0867 (JP); SATO, Miyu, Kuwana-shi, Mie 511-0867 (JP); MIWA, Noriaki, Kuwana-shi, Mie 511-0867 (JP); MIZUTA, Kohei, Kuwana-shi, Mie 511-0867 (JP); OHKI, Chikara, Kuwana-shi, Mie 511-0867 (JP)
(74) Representative: Bockhorni & Brüntjen Partnerschaft Patentanwälte mbB
(86) International application number: PCT/JP2022/036158
(87) International publication number: WO 2023/058518

(57) **Abstract**

A rolling component (10) has a surface (10a, 10b, 10c, 10d) and is made of steel. The rolling component comprises a surface layer portion (50) that is a region up to 20 µm in depth from the surface. The steel contains 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities. In the surface layer portion, the steel has a nitrogen concentration of 0.2 mass percent or more.

## Description

### TECHNICAL FIELD

The present invention relates to a rolling component and a rolling bearing.

### BACKGROUND ART

PTL 1 (Japanese Patent No. 3990212) describes a rolling component. The rolling component described in PTL 1 is made of SUJ2, which is a high carbon chromium bearing steel defined in Japanese Industrial Standards (JIS). The bearing component described in PTL 1 is formed by nitriding, quenching and tempering. The bearing component described in PTL 1 has high wear resistance because cementite or the like is dispersed in the steel.

PTL 2 (Japanese Patent Application Laying-Open No. 2000-234145) describes a rolling component. The rolling component described in PTL 2 is made of steel and has a surface with an increased quantity of retained austenite in the steel. The rolling component described in PTL 2 thus suppresses dent-initiated flaking caused when the rolling component is used in an environment in which foreign substances are easily introduced.

### CITATION LIST

### PATENT LITERATURE

PTL 1: Japanese Patent No. 3990212
PTL 2: Japanese Patent Laying-Open No. 2000-234145

### SUMMARY OF INVENTION

### TECHNICAL PROBLEM

However, the rolling components described in PTLs 1 and 2 have room for improvement in durability when they are used in severe environments. More specifically, when the rolling components described in PTLs 1 and 2 are used in severe environments, they may insufficiently durable due to dimensional change accompanying decomposition of retained austenite as well as hydrogen brittleness accompanying penetration by hydrogen through a surface.

The present invention has been made in view of the above problem in conventional art. More specifically, the present invention provides a rolling component capable of suppressing dimensional change accompanying decomposition of retained austenite as well as hydrogen brittleness accompanying penetration by hydrogen through a surface.

### SOLUTION TO PROBLEM

A rolling component according to a first aspect of the present invention has a surface and is made of steel. The rolling component comprises a surface layer portion that is a region up to 20 µm in depth from the surface. The steel contains 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities. In the surface layer portion, the steel has a nitrogen concentration of 0.2 mass percent or more. A precipitate containing chromium or vanadium as a major ingredient is formed in the steel in the surface layer portion. The steel has a hardness of 64 HRC or more at a location having a distance of 50 µm from the surface. The steel contains retained austenite in a quantity of less than 20 volume percent at the location having the distance of 50 µm from the surface.

A rolling component according to a second aspect of the present invention has a surface and is made of steel. The rolling component comprises a surface layer portion that is a region up to 20 µm in depth from the surface. The steel contains 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities. In the surface layer portion, the steel has a nitrogen concentration of 0.2 mass percent or more. A precipitate containing chromium or vanadium as a major ingredient is formed in the steel in the surface layer portion. In the surface layer portion, the top 50 percent in area fraction of martensite block grains in the steel has an average grain size of 1.3 µm or less. The steel has a hardness of 64 HRC or more at a location having a distance of 50 µm from the surface. The steel contains retained austenite in a quantity of less than 25 volume percent at the location having the distance of 50 µm from the surface.

For the above rolling component, the steel may contain 0.90 mass percent or more and 1.10 mass percent or less of carbon, 0.20 mass percent or more and 0.30 mass percent or less of silicon, 0.40 mass percent or more and 0.50 mass percent or less of manganese, 1.40 mass percent or more and 1.60 mass percent or less of chromium, and 0.20 mass percent or more and 0.30 mass percent or less of molybdenum, and 0.20 mass percent or more and 0.30 mass percent or less of vanadium, with a balance consisting of iron and unavoidable impurities.

For the above rolling component, the precipitate may have a maximum grain size of 1.0 µm or less. For the above rolling component, the precipitate may have an average area fraction of 2.0 percent or more. For the above rolling component, the steel may have a hardness of 65.5 HRC or more at the location having the distance of 50 µm from the surface.

A rolling bearing according to the present invention comprises an inner ring, an outer ring, and a rolling element. At least one of the inner ring, the outer ring, and the rolling element is the above rolling component.

### ADVANTAGEOUS EFFECTS OF INVENTION

The rolling component and rolling bearing of the present invention can suppress dimensional change accompanying decomposition of retained austenite as well as hydrogen brittleness accompanying penetration by hydrogen through a surface.

### BRIEF DESCRIPTION OF DRAWINGS

Fig. 1 is a cross section of a rolling bearing 100.
Fig. 2 is a process diagram showing a method of manufacturing rolling bearing 100.
Fig. 3 is a process diagram showing a modified example of the method of manufacturing rolling bearing 100.
Fig. 4 is a cross-sectional SEM image in the vicinity of a raceway surface of sample 1.
Fig. 5 is a cross-sectional SEM image in the vicinity of a raceway surface of sample 3.
Fig. 6 is a phase map of a cross section in the vicinity of the raceway surface of sample 1, as obtained through EBSD.
Fig. 7 is a phase map of a cross section in the vicinity of a raceway surface of sample 2, as obtained through EBSD.
Fig. 8 is a phase map of a cross section in the vicinity of the raceway surface of sample 3, as obtained through EBSD.
Fig. 9 is a phase map of a cross section in the vicinity of a raceway surface of sample 4, as obtained through EBSD.
Fig. 10 is a graph showing the average grain size of martensite block grains in steel in a region up to 20 µm in depth from the raceway surface in each of samples 1 to 4.

### DESCRIPTION OF EMBODIMENTS

Details of embodiments of the present invention will now be described by referring to the figures. In the following figures, identical or equivalent components are identically denoted and will not be described repeatedly.

Hereinafter, a configuration of a rolling bearing (hereinafter referred to as a "rolling bearing 100") according to an embodiment will be described. Rolling bearing 100 is, for example, a deep groove ball bearing. However, rolling bearing 100 is not limited thereto.

Rolling bearing 100 is, for example, a transaxle for a vehicle (a fuel cell vehicle, an electric vehicle, or the like), a transmission (a continuously variable transmission or the like) for a vehicle, or a motor (a driving gear and a transmission) for a vehicle. Rolling bearing 100 may be for a hydrogen pressure reducing valve of a fuel cell vehicle or for a hydrogen circulator of a fuel cell vehicle. Rolling bearing 100 may be for electrical components of a vehicle or for auxiliaries (an alternator, an electromagnetic clutch of a car air conditioner, a fan coupling device, an intermediate pulley, an electric fan motor, a compressor, and the like) of a vehicle.

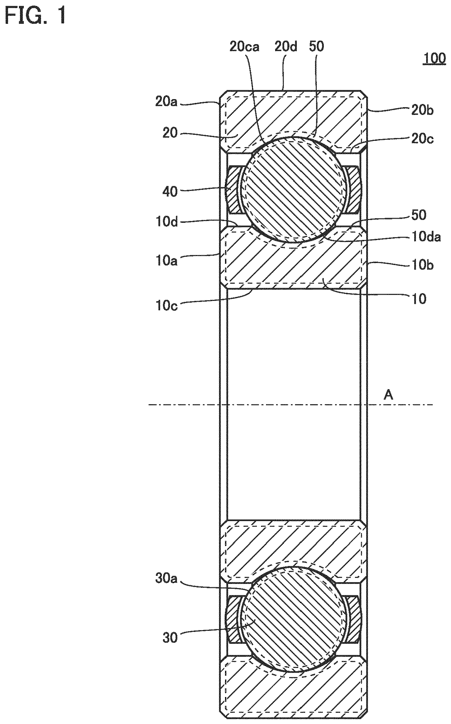

Fig. 1 is a cross section of rolling bearing 100. As shown in Fig. 1, rolling bearing 100 has a central axis A. Fig. 1 shows a cross section parallel to central axis A and passing through central axis A. Rolling bearing 100 comprises an inner ring 10, an outer ring 20, a plurality of rolling elements 30, and a cage 40. Inner ring 10 and outer ring 20 are ring-shaped. Rolling elements 30 are balls (or spherical).

A direction along central axis A is defined as an axial direction. A direction passing across central axis A and orthogonal to central axis A is defined as a radial direction. A direction along a circumference about central axis A is defined as a circumferential direction.

Inner ring 10 includes a first end face 10a, a second end face 10b, an inner circumferential surface 10c, and an outer circumferential surface 10d. First end face 10a, second end face 10b, inner circumferential surface 10c, and outer circumferential surface 10d constitute a surface of inner ring 10. First end face 10a and second end face 10b are end faces of inner ring 10 in the axial direction. Second end face 10b is a face opposite to first end face 10a.

Inner circumferential surface 10c extends in the circumferential direction. Inner circumferential surface 10c faces central axis A. Although not shown, inner ring 10 is fitted to a shaft on inner circumferential surface 10c. Inner circumferential surface 10c has one end in the axial direction contiguous to first end face 10a and the other end in the axial direction contiguous to second end face 10b.

Outer circumferential surface 10d extends in the circumferential direction. Outer circumferential surface 10d faces away from central axis A. That is, outer circumferential surface 10d is a surface opposite to inner circumferential surface 10c in the radial direction. Outer circumferential surface 10d has one end in the axial direction contiguous to first end face 10a and the other end in the axial direction contiguous to second end face 10b.

Outer circumferential surface 10d has a raceway surface 10da. Raceway surface 10da is a portion of outer circumferential surface 10d that comes into contact with rolling element 30. Raceway surface 10da extends in the circumferential direction. Raceway surface 10da is located at a center portion of outer circumferential surface 10d in the axial direction. In cross section, raceway surface 10da has a partial arcuate shape recessed toward inner circumferential surface 10c.

Outer ring 20 includes a first end face 20a, a second end face 20b, an inner circumferential surface 20c, and an outer circumferential surface 20d. First end face 20a, second end face 20b, inner circumferential surface 20c, and outer circumferential surface 20d constitute a surface of outer ring 20. Outer ring 20 is disposed radially outward of inner ring 10 with inner circumferential surface 20c spaced from and facing outer circumferential surface 10d.

First end face 20a and second end face 20b are end faces of outer ring 20 in the axial direction. Second end face 20b is a face opposite to first end face 20a.

Inner circumferential surface 20c extends in the circumferential direction. Inner circumferential surface 20c faces central axis A. Inner circumferential surface 20c has one end in the axial direction contiguous to first end face 20a and the other end in the axial direction contiguous to second end face 20b.

Inner circumferential surface 20c has a raceway surface 20ca. Raceway surface 20ca is a portion of inner circumferential surface 20c that comes into contact with rolling element 30. Raceway surface 20ca extends in the circumferential direction. Raceway surface 20ca is located at a center portion of inner circumferential surface 20c in the axial direction. In cross section, raceway surface 20ca has a partial arcuate shape recessed toward outer circumferential surface 20d.

Outer circumferential surface 20d extends in the circumferential direction. Outer circumferential surface 20d faces away from central axis A. That is, outer circumferential surface 20d is a surface opposite to inner circumferential surface 20c in the radial direction. Although not shown, outer ring 20 is fitted to a housing on outer circumferential surface 20d. Outer circumferential surface 20d has one end in the axial direction contiguous to first end face 20a and the other end in the axial direction contiguous to second end face 20b.

Rolling element 30 is disposed between outer circumferential surface 10d and inner circumferential surface 20c, more specifically, between raceway surface 10da and raceway surface 20ca. The plurality of rolling elements 30 are disposed in the circumferential direction. Rolling element 30 has a surface 30a. Cage 40 holds the plurality of rolling elements 30. Cage 40 holds the plurality of rolling elements 30 such that two adjacent rolling elements 30 have a distance therebetween in the circumferential direction within a fixed range.

Inner ring 10, outer ring 20 and rolling elements 30 are made of steel. More specifically, inner ring 10, outer ring 20 and rolling elements 30 are made of steel having a composition shown in Table 1 (hereinafter referred to as a "first composition").

### [Table 1]

**Table 1**

| C | Si | Mn | Cr | Mo | V | balance |
|---|---|---|---|---|---|---|
| 0.70 or more and 1.10 or less | 0.15 or more and 0.35 or less | 0.30 or more and 0.60 or less | 1.30 or more and 1.60 or less | 0.01 or more and 0.50 or less | 0.01 or more and 0.50 or less | Fe and unavoidable impurities |

| | | | | | | |
|---|---|---|---|---|---|---|
| unit: mass percent | | | | | | |

Carbon affects hardness of steel on a surface of a rolling component (inner ring 10, outer ring 20, and rolling element 30) after quenching. When the content of carbon in the steel is less than 0.70 mass percent, it is difficult to ensure sufficient hardness on the surface of the rolling component. When the content of carbon in the steel is less than 0.70 mass percent, it is necessary to compensate for the carbon content in the surface of the rolling component by carburization or the like, which decreases production efficiency and increases production cost. In contrast, when the content of carbon in the steel exceeds 1.10 mass percent, cracking (quenching cracks) may be caused at the time of quenching. Accordingly, for the steel of the first composition, the carbon content is set to 0.70 mass percent or more and 1.10 mass percent or less.

Silicon is added to ensure deoxidation during refining of steel as well as workability before a nitriding treatment. When the content of silicon in the steel is less than 0.15 mass percent, the steel will have insufficient resistance to temper softening. As a result, the rolling component may have a surface decreased in hardness due to tempering after the quenching, or elevation in temperature when rolling bearing 100 is used. Further, in that case, the steel will have insufficient workability to be worked into the rolling component.

When the content of silicon in the steel exceeds 0.35 mass percent, the steel is excessively hard and would rather be decreased in workability to be worked into the rolling component. Further, in that case, the steel's material cost would increase. Accordingly, for the steel of the first composition, the silicon content is set to 0.15 mass percent or more and 0.35 mass percent or less.

Manganese is added to ensure that steel has hardenability and hardness. When the content of manganese in the steel is less than 0.30 mass percent, it is difficult to ensure that the steel has hardenability. When the content of manganese in the steel exceeds 0.60 mass percent, a manganese-based nonmetallic inclusion as an impurity would increase. Accordingly, for the steel of the first composition, the manganese content is set to 0.30 mass percent or more and 0.60 mass percent or less.

Chromium is added to ensure that steel has hardenability and form a fine precipitate (nitride/carbonitride) along with a nitriding treatment. When the content of chromium in the steel is less than 1.30 mass percent, it is difficult to ensure that the steel has hardenability and form a fine precipitate sufficiently. When the content of chromium in the steel exceeds 1.60 mass percent, the steel's material cost would increase. Accordingly, for the steel of the first composition, the chromium content is set to 1.30 mass percent or more and 1.60 mass percent or less.

Molybdenum is added to ensure that steel has hardenability and form a fine precipitate along with a nitriding treatment. Molybdenum has a strong affinity for carbon and accordingly, precipitates as an insoluble carbide in the steel during the nitriding treatment. The insoluble carbide of molybdenum serves as a precipitation core at the time of quenching, and molybdenum thus increases the amount of the precipitate after quenching.

When the content of molybdenum in the steel is less than 0.01 mass percent, it is difficult to ensure that the steel has hardenability and form a fine precipitate sufficiently. When the content of molybdenum in the steel exceeds 0.50 mass percent, the steel's material cost would increase. Accordingly, for the steel of the first composition, the content of molybdenum is set to 0.01 mass percent or more and 0.50 mass percent or less.

Vanadium is added to ensure that steel has hardenability and form a fine precipitate along with a nitriding treatment. When the content of vanadium in the steel is less than 0.01 mass percent, it is difficult to ensure that the steel has hardenability and form a fine precipitate sufficiently. When the content of vanadium in the steel exceeds 0.50 mass percent, the steel's material cost would increase. Accordingly, for the steel of the first composition, the content of vanadium is set to 0.01 mass percent or more and 0.50 mass percent or less.

Inner ring 10, outer ring 20 and rolling elements 30 may be made of steel having a composition (hereinafter referred to as a "second composition") shown in Table 2. It is unnecessary that inner ring 10, outer ring 20 and rolling element 30 are all formed of the steel of the first or second composition, and at least one of inner ring 10, outer ring 20 and rolling element 30 may be formed of the steel of the first or second composition.

### [Table 2]

**Table 2**

| C | Si | Mn | Cr | Mo | V | balance |
|---|---|---|---|---|---|---|
| 0.90 or more and 1.10 or less | 0.20 or more and 0.30 or less | 0.40 or more and 0.50 or less | 1.40 or more and 1.60 or less | 0.20 or more and 0.30 or less | 0.20 or more and 0.30 or less | Fe and unavoidable impurities |

| | | | | | | |
|---|---|---|---|---|---|---|
| unit: mass percent | | | | | | |

As shown in Fig. 1, inner ring 10, outer ring 20, and rolling element 30 have a surface layer portion 50. For inner ring 10, a region up to 20 µm in depth from the surface of inner ring 10 is surface layer portion 50. For outer ring 20, a region up to 20 µm in depth from the surface of outer ring 20 is surface layer portion 50. For rolling element 30, a region up to 20 µm in depth from surface 30a is surface layer portion 50. For inner ring 10, surface layer portion 50 formed on at least raceway surface 10da suffices, and for outer ring 20, surface layer portion 50 formed on raceway surface 20ca suffices.

Surface layer portion 50 is not necessarily formed at all of the surface of inner ring 10, the surface of outer ring 20, and the surface of rolling element 30, and may be formed at at least one of the surface of inner ring 10, the surface of outer ring 20, and the surface of rolling element 30.

Surface layer portion 50 is a portion formed by a nitriding treatment. The nitrogen concentration in the steel in surface layer portion 50 is 0.2 mass percent or more. The nitrogen concentration in the steel in surface layer portion 50 is measured with an electron probe microanalyzer (EPMA). The nitrogen concentration in the steel in surface layer portion 50 is, for example, 0.5 mass percent or less.

A precipitate is formed in the steel in surface layer portion 50. The precipitate contains chromium or vanadium as a major ingredient. The precipitate is a nitride containing chromium or vanadium as a major ingredient. The precipitate may be a carbonitride containing chromium or vanadium as a major ingredient. The precipitate may contain a mixture of the nitride and the carbonitride.

The nitride containing chromium (vanadium) as a major ingredient is a nitride of chromium (vanadium), or the nitride of chromium (vanadium) with some site of chromium (vanadium) substituted with an alloy element other than chromium (vanadium). The carbonitride containing chromium (vanadium) as a major ingredient is a carbide of chromium (vanadium) with some site of carbon substituted with nitrogen. The carbonitride containing chromium (vanadium) as a major ingredient may have a site of chromium (vanadium) substituted with an alloy element other than chromium (vanadium).

The precipitate preferably has a maximum grain size of 1.0 µm or less. The precipitate preferably has an average area fraction of 2.0 percent or more.

The average area fraction of the precipitate is calculated by acquiring a cross-sectional image of surface layer portion 50 with a field emission scanning electron microscope (FE-SEM) at a magnification of 5,000 times, binarizing the cross-sectional image, and subjecting the binarized cross-sectional image to image processing. The cross-sectional image of surface layer portion 50 is obtained in three or more fields of view, and the average area fraction is an average value of area fractions of precipitates obtained from a plurality of such cross-sectional images.

The grain size of each precipitate is obtained by using the same method as described above to obtain the area of each precipitate, dividing the area by π, and multiplying the square root of the value of the divided area by 2. The maximum one of the grain sizes of the obtained precipitates is set as the maximum grain size of the precipitate.

The steel has a hardness of 64 HRC or more at a location having a depth of 50 µm from the surface of inner ring 10, a location having a depth of 50 µm from the surface of outer ring 20, and a location having a depth of 50 µm from the surface (i.e., surface 30a) of rolling element 30. The steel may have a hardness of 65.5 HRC or more at the location having the depth of 50 µm from the surface of inner ring 10, the location having the depth of 50 µm from the surface of outer ring 20, and the location having the depth of 50 µm from the surface (i.e., surface 30a) of rolling element 30.

The steel may be measured in hardness at the location having the depth of 50 µm from the surface of inner ring 10, the location having the depth of 50 µm from the surface of outer ring 20, and the location having the depth of 50 µm from the surface (i.e., surface 30a) of rolling element 30 by a Rockwell hardness test method defined in JIS (JIS Z 2245:2016).

The steel in surface layer portion 50 has martensite block grains. Two adjacent martensite block grains form a grain boundary with a difference in crystal orientation of 15° or more. From a different point of view, a portion having crystal disorientation with a difference in crystal orientation of less than 15° is not regarded as a crystal grain boundary of martensite block grains. A grain boundary of martensite block grains is determined through EBSD (Electron Back Scattered Diffraction).

In surface layer portion 50, the top 50 percent in area fraction of martensite block grains in the steel preferably has an average grain size of 1.3 µm or less. In surface layer portion 50, the top 30 percent in area fraction of martensite block grains in the steel preferably has an average grain size of 1.6 µm or less.

The average grain size of the top 50(30) percent in area fraction of martensite block grains is measured in the following method. First, a cross section including surface layer portion 50 is observed. In this observation the EBSD method is employed to identify martensite block grains included in an observation field of view. The observation field of view is an area observed at a magnification of 1,500 times. Second, the area of each martensite block grain included in the observation field of view is analyzed from crystal orientation data obtained in the EBSD method.

Third, the area of each martensite block grain included in the observation field of view is added together in descending order in area. This addition is performed until 50 (or 30) percent of the total area of the martensite block grains included in the observation field of view is reached. A circle equivalent diameter is calculated for each martensite block grain added as described above. The equivalent circle diameter is a square root of a value obtained by dividing the area of the martensite block grain by π/4. The average value of the circle equivalent diameters of the martensite block grains added as described above is regarded as the average grain size of the top 50(30) percent in area fraction of martensite block grains.

The steel contains retained austenite in a quantity of less than 20 volume percent, for example, at the location having the depth of 50 µm from the surface of inner ring 10, the location having the depth of 50 µm from the surface of outer ring 20, and the location having the depth of 50 µm from the surface (surface 30a) of rolling element 30. The steel may contain retained austenite in a quantity of less than 25 volume percent, for example, at the location having the depth of 50 µm from the surface of inner ring 10, the location having the depth of 50 µm from the surface of outer ring 20, and the location having the depth of 50 µm from the surface (surface 30a) of rolling element 30.

Quantity of retained austenite in the steel at each of the location having the depth of 50 µm from the surface of inner ring 10, the location having the depth of 50 µm from the surface of outer ring 20, and the location having the depth of 50 µm from the surface (surface 30a) of rolling element 30, is measured through X-ray diffraction. More specifically, quantity of retained austenite in the steel at each of the location having the depth of 50 µm from the surface of inner ring 10, the location having the depth of 50 µm from the surface of outer ring 20, and the location having the depth of 50 µm from the surface (surface 30a) of rolling element 30, is measured using MSF-3M available from Rigaku Corporation.

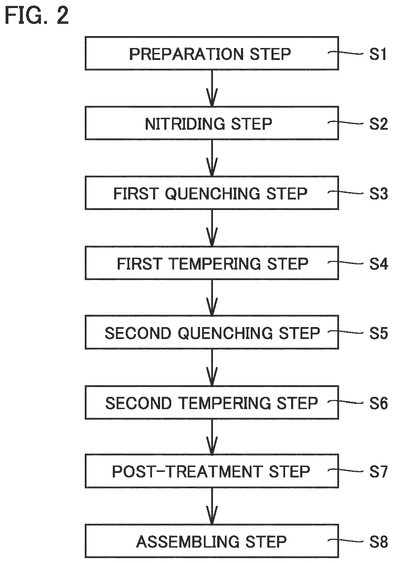

Fig. 2 is a process diagram showing a method of manufacturing rolling bearing 100. As shown in Fig. 2, the method of manufacturing rolling bearing 100 comprises a preparation step S1, a nitriding step S2, a first quenching step S3, a first tempering step S4, a second quenching step S5, a second tempering step S6, a post-treatment step S7, and an assembling step S8.

In preparation step S1, a workpiece is prepared. As the workpiece, a ring-shaped member is prepared when inner ring 10 and outer ring 20 are to be formed, whereas a spherical member is prepared when rolling elements 30 is to be formed. The workpiece is made of steel having a first composition or a second composition.

In nitriding step S2, the workpiece has a surface subjected to a nitriding treatment. The nitriding treatment is performed by holding the workpiece at a temperature equal to or higher than the A₁ transformation point for a predetermined period of time in a gaseous atmosphere containing a gas (e.g., gaseous ammonia) serving as a nitrogen source. In first quenching step S3, the workpiece is quenched. The quenching is performed by holding the workpiece at a temperature equal to or higher than the A₁ transformation point for a predetermined period of time and subsequently cooling the workpiece to a temperature equal to or lower than the Ms transformation point.

In first tempering step S4, the workpiece is tempered. The tempering is performed by holding the workpiece at a temperature lower than the A₁ transformation point for a predetermined period of time.

In second quenching step S5, the workpiece is quenched. The quenching is performed by holding the workpiece at a temperature equal to or higher than the A₁ transformation point for a predetermined period of time and subsequently cooling the workpiece to a temperature equal to or lower than the Ms transformation point.

In second tempering step S6, the workpiece is tempered. The tempering is performed by heating and holding the workpiece at a temperature lower than the A₁ transformation point for a predetermined period of time.

In post-treatment step S7, the workpiece is finished (ground/polished) and cleaned. Thus, inner ring 10, outer ring 20 and rolling elements 30 are formed. In assembling step S8, inner ring 10, outer ring 20, and rolling element 30 are assembled together with cage 40. Thus, rolling bearing 100 having the structure shown in Fig. 1 is manufactured.

The holding temperature in second quenching step S5 is lower than that in nitriding step S2 and first quenching step S3. The holding temperature in nitriding step S2 and first quenching step S3 is, for example, 850°C. The holding temperature in second quenching step S5 is, for example, 810°C. The holding temperature and the holding time in first tempering step S4 and second tempering step S6 are, for example, 180°C and 2 hours, respectively.

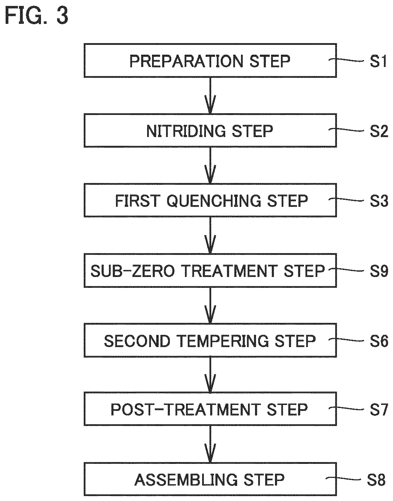

Fig. 3 is a process diagram showing a modified example of the method of manufacturing rolling bearing 100. As shown in Fig. 3, the method of manufacturing rolling bearing 100 may not comprise first tempering step S4 and may comprise a sub-zero treatment step S9 instead of second quenching step S5. In sub-zero treatment step S9, the workpiece is cooled to a temperature for example of - 100°C or higher and room temperature or lower.

### (Effect of Rolling Bearing According to Embodiment)

An effect of rolling bearing 100 will be described below.

Rolling bearing 100 has inner ring 10, outer ring 20 and rolling element 30 made of steel having the first composition or the second composition, and accordingly, has a fine precipitate formed in the steel in surface layer portion 50. This ensures that the steel has hardness on the surface of inner ring 10, the surface of outer ring 20, and the surface of rolling element 30 (more specifically, a hardness of 65 HRC or more in the steel at the location having the depth of 50 µm from the surface of inner ring 10, the location having the depth of 50 µm from the surface of outer ring 20, and the location having the depth of 50 µm from the surface of rolling element 30), and can also prevent their precipitates from being source of stress concentration (or serving as an origin of cracking).

Rolling bearing 100 has a fine precipitate formed in the steel in surface layer portion 50 and thus ensures that the steel has hardness on the surface of inner ring 10, the surface of outer ring 20, and the surface of rolling element 30, and accordingly, suppresses formation of a nascent metal surface on the surface of inner ring 10, the surface of outer ring 20, and the surface of rolling element 30. Rolling bearing 100 is thus less likely to generate hydrogen on the surface of inner ring 10, the surface of outer ring 20, and the surface of rolling element 30.

In rolling bearing 100, a vicinity of a fine precipitate formed in the steel in surface layer portion 50 serves as a site to trap hydrogen, and this reduces an amount of hydrogen penetrating into surface layer portion 50. Rolling bearing 100 is thus less likely to have early flaking damage attributed to hydrogen brittleness.

Rolling bearing 100 contains retained austenite in a quantity of less than 20 (or 25) volume percent in the steel at the location having the depth of 50 µm from the surface of inner ring 10, the location having the depth of 50 µm from the surface of outer ring 20, and the location having the depth of 50 µm from the surface of rolling element 30, and can thus suppress dimensional change of inner ring 10, outer ring 20 and rolling element 30 caused by decomposition of retained austenite as temperature rises when the rolling bearing is used.

When the steel in surface layer portion 50 has martensite block grains refined such that the top 50 percent in area fraction of martensite block grains has an average grain size of 1.3 µm or less, surface layer portion 50 is increased in toughness and inner ring 10, outer ring 20, and rolling element 30 each have a surface and a vicinity thereof improved in shear resistance. Accordingly, in this case, rolling bearing 100 can further be improved in durability.

### (Examples)

Samples 1 to 4 were prepared as samples of a bearing washer. Samples 1 and 2 were made of steel of the composition shown in Table 3, and samples 3 and 4 were made of steel of the composition shown in Table 4. The composition of the steel shown in Table 3 corresponds to the first composition (or the second composition), and the composition shown in Table 4 corresponds to a composition of SUJ2 that is a high carbon chromium bearing steel defined in JIS.

### [Table 3]

**Table 3**

| C | Si | Mn | Cr | Mo | V | balance |
|---|---|---|---|---|---|---|
| 1.00 | 0.26 | 0.44 | 1.51 | 0.24 | 0.24 | Fe and unavoidable impurities |

| | | | | | | |
|---|---|---|---|---|---|---|
| unit: mass percent | | | | | | |

### [Table 4]

**Table 4**

| C | Si | Mn | Cr | Mo | V | balance |
|---|---|---|---|---|---|---|
| 0.99 | 0.26 | 0.44 | 1.51 | 0.00 | 0.00 | Fe and unavoidable impurities |

| | | | | | | |
|---|---|---|---|---|---|---|
| unit: mass percent | | | | | | |

Samples 1 and 2 were subjected to nitriding step S2, first quenching step S3, first tempering step S4, second quenching step S5, and second tempering step S6. Sample 3 was subjected to nitriding step S2, first quenching step S3, and first tempering step S4. Sample 4 was subjected to first quenching step S3 and first tempering step S4.

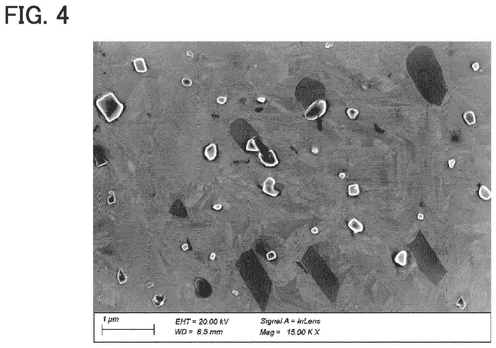

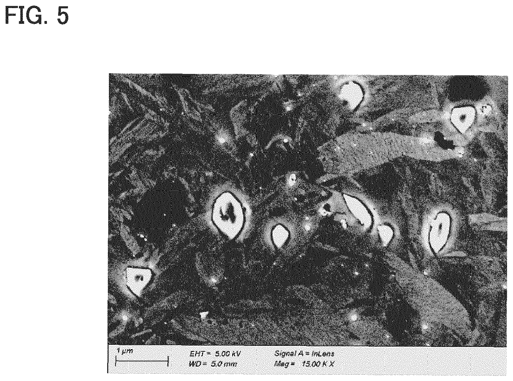

Fig. 4 is a cross-sectional SEM image in a vicinity of a raceway surface of sample 1. Grains shown in Fig. 4 highlighted are precipitates containing chromium or vanadium as a major ingredient. Fig. 5 is a cross-sectional SEM image in a vicinity of a raceway surface of sample 3. Grains shown in Fig. 5 highlighted are precipitates containing chromium as a major ingredient, and gray elliptical grains shown in Fig. 5 are cementite grains.

As shown in Figs. 4 and 5 and Table 5, samples 1 and 2 provided precipitates containing chromium or vanadium as a major ingredient finely (with a maximum grain size of 1.0 µm or less) and densely (with an average area fraction of 2.0 percent or more) in a region up to 20 µm in depth from the raceway surface. While sample 3 provided a precipitate containing chromium as a major ingredient in a region up to 20 µm in depth from the raceway surface, the precipitate was coarsened and had a small area fraction. Sample 4 had no precipitate containing chromium or vanadium as a major ingredient in a region up to 20 µm in depth from the raceway surface.

### [Table 5]

**Table 5**

| | | sample 1 | sample 2 | sample 3 | sample 4 |
|---|---|---|---|---|---|
| region up to 20 µm in depth from raceway surface | nitrogen concentration (mass %) | 0.2 or more and 0.5 or less | 0.2 or more and 0.5 or less | 0.3 or more and 0.5 or less | 0.0 |
| | maximum grain size of precipitate with Cr or V as major ingredient (µm) | 0.8 | 0.8 | 1.1 | no precipitation |
| | average area fraction of precipitate with Cr or V as major ingredient (%) | 3.0 | 2.4 | 1.6 | no precipitation |
| | area fraction of cementite (%) | 6 or more and 10 or less | 1 or more and 8 or less | 6 or more and 7 or less | 8 or more and 11 or less |
| location having depth of 50 µm from raceway surface | quantity of retained austenite (volume %) | 10 or more and less than 20 | 15 or more and less than 25 | 30 or more and less than 31 | 10 or more and less than 12 |
| | hardness (HRC) | 64 or more and 67 or less | 64 or more and 65 or less | 62 or more and 63 or less | 62 or more and 63 or less |
| | compressive residual stress in circumferential direction (MPa) | 80 or more | 80 or more | 80 or more | 30 or less |
| raceway surface's resistance to formation of indentation | | significantly excellent | significantly excellent | excellent | standard |

As shown in Table 5, samples 1 and 2 each had a nitrogen concentration of 0.2 mass percent or more and 0.5 mass percent or less in the steel in the region up to 20 µm in depth from the raceway surface. Sample 3 had a nitrogen concentration of 0.3 mass percent or more and 0.5 mass percent or less in the steel in the region up to 20 µm in depth from the raceway surface. Sample 4 contained no nitrogen in the steel in the region up to 20 µm in depth from the raceway surface.

Sample 1 contained retained austenite in a quantity of less than 20 volume percent in the steel at a location having a depth of 50 µm from the raceway surface, and sample 2 contained retained austenite in a quantity of less than 25 volume percent in the steel at a location having a depth of 50 µm from the raceway surface. Sample 3 contained retained austenite in a quantity exceeding 25 volume percent in the steel at a location having a depth of 50 µm from the raceway surface, and sample 4 contained retained austenite in a quantity of less than 20 volume percent in the steel at a location having a depth of 50 µm from the raceway surface.

Samples 1 and 2 each provided the steel with a hardness of 64 HRC or more at the location having the depth of 50 µm from the raceway surface. Samples 3 and 4 each provided the steel with a hardness of less than 64 HRC at the location having the depth of 50 µm from the raceway surface. From this fact, it has been clarified that samples 1 and 2, providing fine and dense precipitates containing chromium or vanadium as a major ingredient in the steel in a region up to 20 µm in depth from the raceway surface, ensure that the steel has hardness in the vicinity of the raceway surface and suppress generation of hydrogen in the raceway surface as well as penetration by hydrogen through the raceway surface. Further, it has been clarified that samples 1 and 2, containing retained austenite in a quantity of less than 20 volume percent or less than 25 volume percent in the steel in the vicinity of the raceway surface, suppress dimensional change with time accompanying decomposition of retained austenite.

Samples 1 and 2 each had larger compressive residual stress than sample 4 in the circumferential direction in the vicinity of the raceway surface (at a location having a depth of 50 µm from the raceway surface). Further, samples 1 and 2 are each more resistant to formation of indentation on the raceway surface than samples 3 and 4.

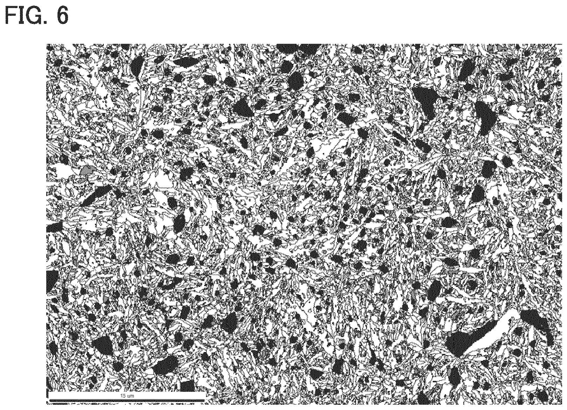

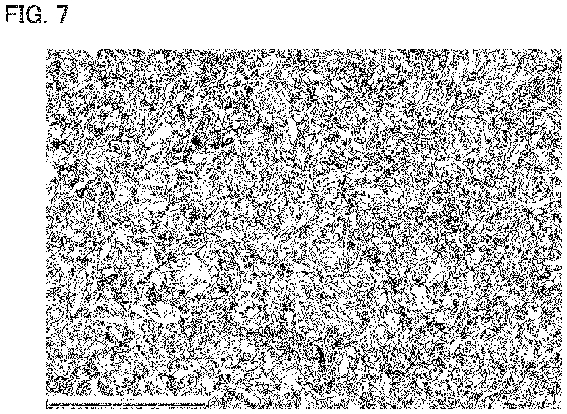

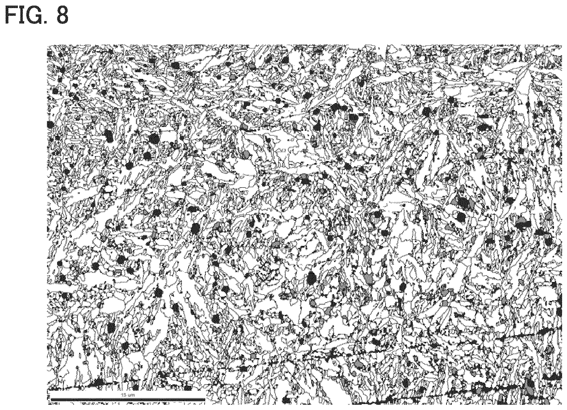

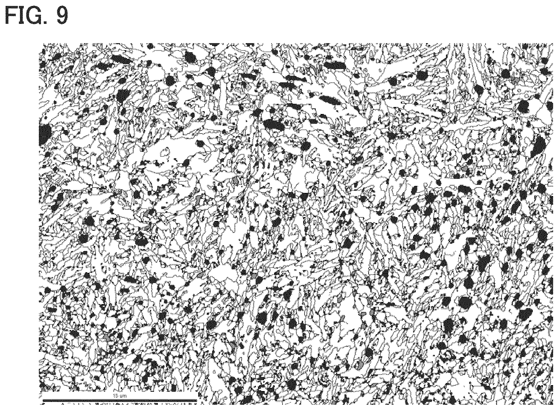

Fig. 6 is a phase map of a cross section in the vicinity of the raceway surface of sample 1, as obtained through EBSD. Fig. 7 is a phase map of a cross section in the vicinity of the raceway surface of sample 2, as obtained through EBSD. Fig. 8 is a phase map of a cross section in the vicinity of the raceway surface of sample 3, as obtained through EBSD. Fig. 9 is a phase map of a cross section in the vicinity of the raceway surface of sample 4, as obtained through EBSD. Figs. 6 to 9 show martensite block grains as white areas.

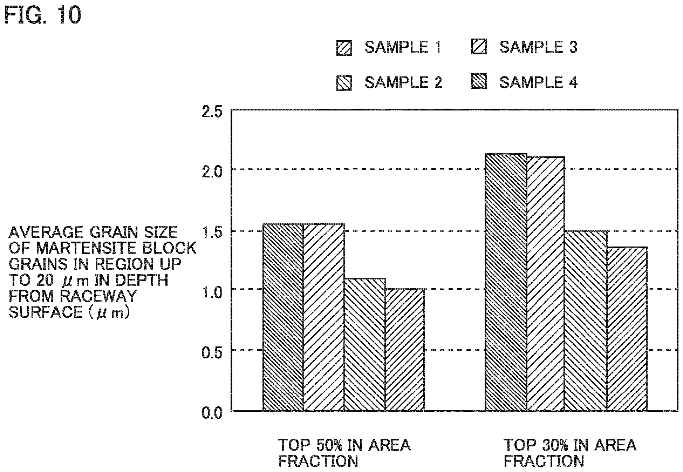

Fig. 10 is a graph showing the average grain size of martensite block grains in the steel in the region up to 20 µm in depth from the raceway surface in each of samples 1 to 4. In Fig. 10, the vertical axis represents the average grain size (in µm) of martensite block grains in the steel in the region up to 20 µm in depth from the raceway surface. As shown in Figs. 6 to 10, samples 1 and 2 each had the top 50 percent in area fraction of martensitic block grains with an average grain size of 1.3 µm or less in the steel in the region up to 20 µm in depth from the raceway surface and the top 30 percent in area fraction of martensitic block grains with an average grain size of 1.6 µm or less in the steel in the region up to 20 µm in depth from the raceway surface.

In contrast, samples 3 and 4 each had the top 50 percent in area fraction of martensitic block grains with an average grain size exceeding 1.3 µm in the steel in the region up to 20 µm in depth from the raceway surface and the top 30 percent in area fraction of martensitic block grains with an average grain size exceeding 1.6 µm in the steel in the region up to 20 µm in depth from the raceway surface. From this fact, it has been clarified that samples 1 and 2, providing fine and dense precipitates containing chromium or vanadium as a major ingredient in the steel in the region up to 20 µm in depth from the raceway surface, consequently have martensite block grains refined and thus improve shear resistance in the vicinity of the raceway surface and hence improve the raceway surface in durability.

While an embodiment of the present invention has been described as above, the embodiment can also be variously modified. Further, the scope of the present invention is not limited to the above embodiment. The scope of the present invention is defined by the terms of the claims, and is intended to include any modifications within the meaning and scope equivalent to the terms of the claims.

### REFERENCE SIGNS LIST

100 rolling bearing, 10 inner ring, 10a first end face, 10b second end face, 10c inner circumferential surface, 10d outer circumferential surface, 10da raceway surface, 20 outer ring, 20a first end face, 20b second end face, 20c inner circumferential surface, 20 ca raceway surface, 20d outer circumferential surface, 30 rolling element, 30a surface, 40 cage, 50 surface layer portion, A central axis, S 1 preparation step, S2 nitriding step, S3 first quenching step, S4 first tempering step, S5 second quenching step, S6 second tempering step, S7 post-treatment step, S8 assembling step, and S9 sub-zero treatment step.

## Claims

1. A rolling component made of steel and having a surface, comprising
a surface layer portion that is a region up to 20 µm in depth from the surface,
the steel containing 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities,
in the surface layer portion, the steel having a nitrogen concentration of 0.2 mass percent or more,
in the surface layer portion, the steel having a precipitate formed therein with chromium or vanadium contained as a major ingredient,
the steel having a hardness of 64 HRC or more at a location having a distance of 50 µm from the surface,
the steel containing retained austenite in a quantity of less than 20 volume percent at the location having the distance of 50 µm from the surface.

2. A rolling component made of steel and having a surface, comprising
a surface layer portion that is a region up to 20 µm in depth from the surface,
the steel containing 0.70 mass percent or more and 1.10 mass percent or less of carbon, 0.15 mass percent or more and 0.35 mass percent or less of silicon, 0.30 mass percent or more and 0.60 mass percent or less of manganese, 1.30 mass percent or more and 1.60 mass percent or less of chromium, 0.01 mass percent or more and 0.50 mass percent or less of molybdenum, and 0.01 mass percent or more and 0.50 mass percent or less of vanadium, with a balance consisting of iron and unavoidable impurities,
in the surface layer portion, the steel having a nitrogen concentration of 0.2 mass percent or more,
in the surface layer portion, the steel having a precipitate formed therein with chromium or vanadium contained as a major ingredient,
in the surface layer portion, the top 50 percent in area fraction of martensite block grains in the steel having an average grain size of 1.3 µm or less,
the steel having a hardness of 64 HRC or more at a location having a distance of 50 µm from the surface,
the steel containing retained austenite in a quantity of less than 25 volume percent at the location having the distance of 50 µm from the surface.

3. The rolling component according to claim 1 or 2, wherein the steel contains 0.90 mass percent or more and 1.10 mass percent or less of carbon, 0.20 mass percent or more and 0.30 mass percent or less of silicon, 0.40 mass percent or more and 0.50 mass percent or less of manganese, 1.40 mass percent or more and 1.60 mass percent or less of chromium, and 0.20 mass percent or more and 0.30 mass percent or less of molybdenum, and 0.20 mass percent or more and 0.30 mass percent or less of vanadium, with a balance consisting of iron and unavoidable impurities.

4. The rolling component according to any one of claims 1 to 3, wherein the precipitate has a maximum grain size of 1.0 µm or less.

5. The rolling component according to any one of claims 1 to 4, wherein the precipitate has an average area fraction of 2.0 percent or more.

6. The rolling component according to any one of claims 1 to 5, wherein the steel has a hardness of 65.5 HRC or more at the location having the distance of 50 µm from the surface.

7. A rolling bearing comprising:
an inner ring;
an outer ring; and
a rolling element,
at least one of the inner ring, the outer ring, and the rolling element being the rolling component according to any one of claims 1 to 6.
